# EUROPÄISCHE PATENTSCHRIFT

(11) **EP 1 573 219 B1**
(45) Veröffentlichungstag und Bekanntmachung des Hinweises auf die Patenterteilung: **14.05.2008**
(21) Anmeldenummer: 03782340.8
(22) Anmeldetag: 09.12.2003
(51) Int. Cl.: F16D 25/00

(54) **DRUCKGESTEUERTE REIBUNGSKUPPLUNG**
PRESSURE-REGULATED FRICTION CLUTCH
EMBRAYAGE A FRICTION COMMANDE PAR PRESSION

(30) Priorität: 11.12.2002 DE 10257866
(43) Veröffentlichungstag der Anmeldung: 14.09.2005
(73) Patentinhaber: KNORR-BREMSE SYSTEME FÜR NUTZFAHRZEUGE GMBH, 80809 München (DE)
(72) Erfinder: RÖTHER, Friedbert, 74389 Cleebronn (DE); DELFS, Joachim, 71282 Hemmingen (DE)
(74) Vertreter: Schönmann, Kurt
(86) Internationale Anmeldenummer: PCT/EP2003/013937
(87) Internationale Veröffentlichungsnummer: WO 2004/053349

(56) Entgegenhaltungen:
- EP-A- 0 311 285
- GB-A- 725 688
- US-A- 3 306 407
- US-A- 3 753 478
- US-A- 4 418 807

## Beschreibung

Die Erfindung betrifft eine druckgesteuerte Reibungskupplung, insbesondere für den Einsatz in automatisierten Schaltgetrieben von Kraftfahrzeugen.

Reibungskupplungen kommen üblicherweise in Fahrzeugen, vorwiegend in Personenkraftfahrzeugen zum Einsatz. Dabei dient die Reibungskupplung zur Übertragung eines von einer Antriebswelle - der Motorwelle - erzeugten Drehmoments an die Abtriebswelle, welche die Verbindung mit einem angeschlossenen Schaltgetriebe herstellt. Hierzu sind Schaltvorgänge notwendig, die eine optimierte Drehmomentübertragung gewährleisten. Die Schaltvorgänge werden meist manuell von dem Fahrer vorgenommen. Aktuelle Tendenzen, die einen erhöhten Schaltkomfort verlangen, erhöhen jedoch den Bedarf an automatisierten Schaltvorgängen.

Allgemein bekannt sind mechanische Kupplungen in Fahrzeuggetrieben, die mittels einer Vorspannkraft eine Übertragung eines Drehmoments ermöglichen und über einen Ausrückhebel oder Zentralausrücker die Vorspannkraft zwecks Schalten der Kupplung aufheben. Dabei wird die meist durch Tellerfedern aufgebrachte Vorspannkraft durch eine entgegengesetze Kraft eines Ausrücksystems manuell oder automatisch herausgenommen, so dass kein Drehmoment mehr übertragen wird, und das Getriebe schaltbar ist.

Das Dokument US 3 753 478 offenbar den gattungsbildenden Stand der Technik.

Aus der DE 197 46 538 A1 ist eine Reibungskupplung bekannt. Die dort aufgeführte Lösung betrifft ein hydraulisch betätigtes Ausrücksystem für eine Fahrzeugreibungskupplung, bestehend aus einer Zylinder-Kolben-Einheit, in der ein Ringkolben verschiebbar geführt ist, an dem endseitig ein Ausrücklager befestigt ist, das mittels einer Druckfeder kraftbeaufschlagt an der Reibungskupplung abgestützt ist.

Nachteilig an dieser Lösung ist, dass zur Aufhebung der Drehmomentübertragung eine die Vorspannkraft überragende Kraft angewendet werden muss, wodurch das Ausrücksystem in entsprechend großen Abmaßen zu dimensionieren ist. Weiterhin weist diese Feder-SpeicherEinheit gewöhnlich aufgrund der Feder eine degressive Kraft/Weg-Kennlinie auf, welche für den Einbau in ein automatisiertes Schaltgetriebe eher ungeeignet ist.

Aus der US 4,418,807 geht eine druckgesteuerte Reibungskupplung hervor. Das Drehmoment wird hier von der Antriebswelle auf die Abtriebswelle übertragen, indem eine permanente Druckmittelbeaufschlagung einer in die Reibungskupplung integrierten Zylinder-Kolben-Einheit erfolgt. Somit wendet sich diese Lösung von dem vorstehend diskutierten Feder-Speicher-Prinzip ab. Da zur Betätigung der Kupplung mehrere schwenkbar innerhalb der Reibungskupplung angeordnete Kipphebel vorzusehen sind, ist diese Lösung jedoch recht aufwendig konstruiert und erfordert einen entsprechend hohen Montageaufwand.

Es ist daher die Aufgabe der vorliegenden Erfindung, eine Reibungskupplung zu schaffen, die einerseits kleinere Einbaumaße ermöglicht und andererseits ein direktes Kuppeln mit einer linearen Kraft/Weg-Kennlinie für den bevorzugten Einsatz in einem automatisierten Schaltgetriebe ermöglicht.

Diese Aufgabe wird von einer druckgesteuerten Reibungskupplung gemäß Anspruch 1 gelöst. Vorteilhafte Weiterbildungen der Erfindung sind in den abhängigen Ansprüchen angegeben.

Die Erfindung schließt die technische Lehre ein, dass die Reibungskupplung eine druckmittelbetätigbare Zylinder-Kolben-Einheit umfasst, die eine kraftschlüssige Verbindung einer Antriebswelle mit einer ortsfest darauf angeordneten Mitnehmerscheibe und einer Antriebswelle mit einer ortsfest darauf angeordneten Antriebsscheibe zur Übertragung eines Drehmoments der Antriebswelle in Folge einer permanenten Druckmittelbeaufschlagung der Zylinder-Kolben-Einheit ermöglicht.

Diese Lösung bietet den Vorteil, dass die Übertragung des Drehmoments erst bei Beaufschlagung der Zylinder-Kolben-Einheit erfolgt. Dadurch sind Verspannfedern und dergleichen entbehrlich, so dass eine kompakte Zylinder-Kolben-Einheit entsteht. Die Abmaße der Reibungskupplung verringern sich entsprechend. Weiterhin weist die Zylinder-Kolben-Einheit wegen der Druckmittelbeaufschlagung eine lineare Kraft / Weg - Kennlinie auf, wodurch die Reibungskupplung besonders für ein automatisiertes Schaltgetriebe geeignet ist.

Zur Übertragung des Drehmoments der Antriebswelle über eine Antriebsscheibe werden auf der Abtriebswelle mit der Antriebsscheibe korrespondierende Mittel benötigt. Diese korrespondierenden Mittel sind in Form einer Mitnehmberscheibe ausgebildet. Die Mitnehmerscheibe ist ortsfest auf der Abtriebswelle angeordnet und nimmt das Drehmoment der Antriebswelle mit, d.h. es wird das Drehmoment aufgenommen und an die Abtriebswelle übertragen. Die Mitnehmerscheibe weist praktisch die gleichen Vorteile wie die Antriebsscheibe auf.

Die Antriebsscheibe und/oder die Mitnehmerscheibe sind vorteilhafter Weise scheibenartig ausgebildet. Es sind jedoch auch ähnliche Formen wie Platten, Ringe und dergleichen denkbar.

Von besonderem Vorteil ist es, dass die Zylinder-Kolben-Einheit konzentrisch um die Abtriebswelle angeordnet ist, um eine symmetrische Belastung zu erzeugen.

Eine die Erfindung verbessernde Maßnahme sieht vor, dass die Reibungskupplung auch Mittel aufweist, die beweglich zwischen der Zylinder-Kolben-Einheit und der Mitnehmerscheibe auf der Abtriebswelle angeordnet sind, um eine Verbindung der Antriebswelle mit der Abtriebswelle zu realisieren. Auf diese Weise lässt sich die Kolbenbewegung der Zylinder-Kolben-Einheit über ein Bauteil auf die Mitnehmerscheibe übertragen. Mit diesem Bauteil lässt sich die Kolbenbewegung optimal an die Anforderungen anpassen. Beispielsweise lässt sich auf einfache Weise ein Längenausgleich oder ein angepasste Krafteingriffsort realisieren. Die Mittel müssen entsprechend der geforderten Bewegung gelagert sein.

Vorzugsweise ist hierfür eine axial auf der Abtriebswelle verschiebbare Klemmscheibe vorgesehen. Auf diese Weise lässt sich die Axialbewegung des Kolbens mit einem kleinbauenden und einfach herzustellenden Bauteil übertragen.

Vorteilhafterweise ist die Klemmscheibe mit dem Kolben der Zylinder-Kolben-Einheit über separate Verbindungsmittel verbunden. Durch diese direkte Verbindung von Klemmscheibe und Kolben, lässt sich die axiale Bewegung des Kolbens auf die Klemmscheibe übertragen, ohne dass eine Rotationsbewegung der Klemmscheibe um die Abtriebswelle beeinflusst wird.

Vorzugsweise ist die Klemmscheibe über eine formschlüssige Verbindung axial verschiebbar und mitdrehbar mit der Antriebswelle verbunden, um der Drehbewegung der Antriebswelle zu folgen. Dadurch dass die Klemmscheibe permanent mit der Antriebswelle mitdrehbar verbunden ist, entfällt bei einem Schaltvorgang das Hochfahren - das Anpassen der Rotationsbewegung der Klemmscheibe aus der Ruheposition in die Soll-Rotationsbewegung der Antriebswelle.

Es ist vorteilhaft, dass die Klemmscheibe mittels eines Lagers drehbar am Kolben gelagert ist. Das Lager ist dabei so ausgebildet, dass es die Rotationsbewegung und auch die axiale Verschiebung der Klemmscheibe ermöglicht.

Um die Verbindung zwischen Antriebswelle und Abtriebswelle zu trennen ist es vorteilhaft, wenn die Reibungskupplung ein Ausrückelement aufweist, das nach Art einer Feder ausgebildet sein kann. Ein Ausrückelement ist jedoch entbehrlich, da die Kupplung selbsttrennend ist.

Es ist auch denkbar das Ausrückelement als ein zwischen der Klemmscheibe und der Mitnehmerscheibe sandwichartig angeordnetes, elastisches Element auszubilden. Durch diese Anordnung lässt sich ein einfach zu fertigendes Ausrückelement mit geringen Abmaßen platzsparend in der Kupplung unterbringen.

Auf gleiche Weise erzielt man einen Vorteil dadurch, dass das Ausrückelement vorlastlos ausgebildet ist. Aufgrund der Anordnung des Ausrückelements wird dieses ohne eine Vorspannung oder eine andere Vorlast montiert. Durch die Bewegung der Klemmscheibe in Richtung Antriebswelle wird das Ausrückelement gespannt.

Dadurch dass das Ausrückelement hebellos ausgebildet ist, lässt sich im Vergleich zu bekannten Ausrücksystemen weiter Bauraum einsparen. Die gesamte Kupplung kann kompakter und platzsparender hergestellt werden.

Die Zylinder-Kolben-Einheit kann als hydraulisch oder pneumatisch betätigbare Zylinder-Kolben-Einheit ausgebildet sein.

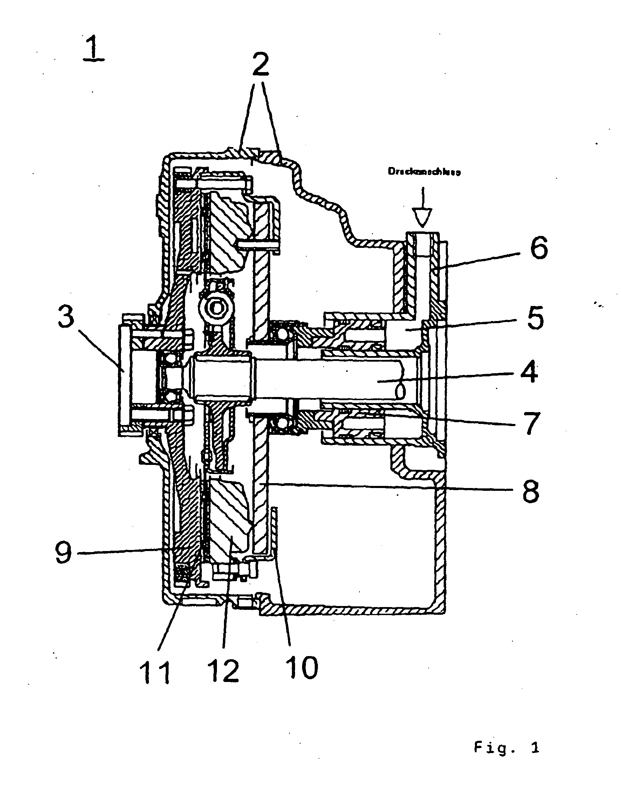

Weitere die Erfindung verbessernde Maßnahmen sind in den Unteransprüchen angegeben oder werden nachstehend gemeinsam mit der Beschreibung eines bevorzugten Ausführungsbeispiels der Erfindung anhand der einzigen Figur näher dargestellt.

Die in einer geschnittenen Seitenansicht dargestellte Reibungskupplung 1 umfasst einen in einem Kupplungsgehäuse 2 angeordneten Reibungsmechanismus, der eine Antriebswelle 3 und eine Antriebswelle 4 miteinander verbindet bzw. trennt. Der Kupplungsmechanismus wird mittels einer über ein Druckmittel betätigbare Zylinder-Kolben-Einheit 5 betätigt. Die Druckmittelzuführung 6 der Zylinder-Kolben-Einheit 5 ist mittels eines Stutzens 6 realisiert. Über den Stutzen 6 wird ein Druckmittel, vorzugsweise Luft in die konzentrisch um die Abtriebswelle 4 angeordnete Zylinder-Kolben-Einheit 5 gefüllt. Hierdurch wird der als Ringkolben ausgebildete Kolben 7 der Zylinder-Kolben-Einheit axial in Richtung Antriebswelle 3 bewegt. Der Kolben 7 überträgt die axiale Bewegung an eine drehbar um die Abtriebswelle 4 gelagerte Klemmscheibe 8. Die Klemmscheibe 8 ist formschlüssig über Führungsbolzen und über eine auf der Antriebswelle 3 ortsfest angeordnete Antriebsscheibe 9 mit der Antriebswelle 3 verbunden, so dass die Klemmscheibe 8 axial verschiebbar auf der Abtriebswelle 4 sitzt und gleichzeitig der Drehbewegung der Antriebswelle 3 folgt. Die axiale Bewegung der Klemmscheibe 8 ist durch winklige Bleche 10 in axialer Richtung begrenzt. Auf diese Weise ist gewährleistet, dass die Klemmscheibe 8 stets mit der Antriebswelle 3 verbunden ist. Zwischen der Klemmscheibe 8 und der Antriebsscheibe 9 sind eine Mitnehmerscheibe 11 und ein Ausrückelement 12 angeordnet. Die Mitnehmerscheibe 11 ist ortsfest auf der Abtriebswelle 4 angeordnet und schleift entlang der Antriebsscheibe 9.

Bei einer axialen Bewegung des Kolbens 7 und damit auch der Klemmscheibe 8 in Richtung Antriebswelle 3 wird das zwischen Mitnehmerscheibe 11 und Klemmscheibe 8 sandwichartig angeordnete Ausrückelement 12 zusammengedrückt. Durch die Klemmung von Antriebsscheibe 9, Mitnehmerscheibe 11, Ausrückelement 12 und Klemmscheibe 8 wird eine kraftschlüssige Verbindung zwischen der Antriebsscheibe 9 und der Mitnehmerscheibe 11 und somit zwischen Antriebswelle 3 und Abtriebswelle 4 erzeugt. Das Antriebsdrehmoment der Antriebswelle 3 wird auf die Abtriebswelle 4 übertragen, die Kupplung ist eingekuppelt. Während des eingekuppelten Zustands ist der Kolben 7 der Zylinder-Kolben-Einheit 5 permanent druckbeaufschlagt. Soll nun die Kupplung entkuppelt werden, wird der Druck reduziert. Dadurch expandiert das Ausrückelement 12 in seine Ausgangsgröße und verschiebt die Klemmscheibe 8 axial in Richtung Abtriebswelle 4.

### Bezugszeichenliste

- 1: Reibungskupplung
- 2: Kupplungsgehäuse
- 3: Antriebswelle
- 4: Abtriebswelle
- 5: Zylinder-Kolben-Einheit
- 6: Stutzen
- 7: Kolben
- 8: Klemmscheibe
- 9: Antriebsscheibe
- 10: Blech
- 11: Mitnehmerscheibe
- 12: Ausrückelement

## Patentansprüche

1. Druckgesteuerte Reibungskupplung (1), insbesondere für Kraftfahrzeuge, die eine druckmittelbetitigbare Zylinder-Kolben-Einheit (5) umfasst, um eine kraftschlüssige Verbindung zwischen einer Abtriebswelle (4) mit einer ortsfest darauf angeordneten Mitnehmerscheibe (11) und einer Antriebswelle (3) mit einer ortsfest darauf angeordneten Antriebsscheibe (9) zur Übertragung eines Drehmoments der Antriebswelle (5) in Folge einer permanenten Druckmittelbeaufschlagung der Zylinder-Kolben-Einheit (5) herzustellen, wobei die Reibungskupplung (1) Mittel aufweist, die beweglich zwischen der Zylinder-Kolben-Einheit (5) und der Mitnehmerscheibe (11) auf der Abtriebswelle (4) angeordnet sind, um eine Verbindung der Antriebswelle (3) mit der Abtriebswelle (4) zu realisieren,
**dadurch gekennzeichnet, dass** die Mittel als eine axial auf der Abtriebswelle (4) verschiebbare Klemmscheibe (8) hebellos ausgebildet sind.

2. Druckgesteuerte Reibungskupplung nach Anspruch 1,
**dadurch gekennzeichnet dass** die Klemmscheibe (8) mit dem Kolben (7) der Zylinder-Kolben-Einheit (5) mit Verbindungsmitteln zur Übertragung der Axialbewegung des Kolbens (7) auf die Klemmscheibe (8) verbunden ist

3. Druckgesteuerte Reibungskupplung nach Anspruch 2,
**dadurch gekennzeichnet, dass** die Klemmscheibe (8) über eine formschlüssige Verbindung mit der Antriebswelle (3) axial verschiebbar und gleichzeitig mitdrehbar verbunden ist, um der Drehbewegung der Antriebswelle (3) zu folgen.

4. Druckgesteuerte Reibungskupplung nach Anspruch 3,
**dadurch gekennzeichnet, dass** die Klemmscheibe (8) mittels eines Lagers drehbar gelagert ist.

5. Druckgesteuerte Reibungskupplung nach Anspruch 1,
**dadurch gekennzeichnet, dass** ein Ausrückelement (12) zur Trennung der Verbindung zwischen Antriebswelle (3) und Abtriebswelle (4) an der Klemmscheibe (8) vorgesehen ist

6. Druckgesteuerte Reibungskupplung nach Anspruch 5,
**dadurch gekennzeichnet dass** das Ausrückelement (12) als ein zwischen der Klemmscheibe (8) und der Mitnehmerscheibe (11) sandwichartig angeordnetes, elastisches Element ausgebildet ist.

7. Druckgesteuerte Reibungskupplung nach Anspruch 6,
**dadurch gekennzeichnet, dass** das Ausrückelement (12) vorlastlos ausgebildet ist.

8. Druckgesteuerte Reibungskupplung nach einem der vorstehenden Anspräche, **dadurch gekennzeichnet, dass** die Zylinder-Kolben-Einheit (5) eine pneumatisch betätigbare Zylinder-Kolben-Einheit (5) ist.

9. Druckgesteuerte Reibungskupplung nach einem der vorstehenden Ansprüche, **dadurch gekennzeichnet, dass** die Reibungskupplung (1) eine lineare Kraft / Weg-Kennlinie aufweist um einen komfortablen Schaltvorgang zu ermöglichen.

10. Druckgesteuerte Reibungskupplung nach einem der vorstehenden Ansprüche, **dadurch gekennzeichnet, dass** die Kolben-Zylinder-Einheit (5) als separate Baueinheit austauschbar am Kupplungsgehäuse (2) montiert ist.

## Claims

1. Pressure-controlled friction clutch (1), in particular for motor vehicles, which comprises a cylinder-piston unit (5) adapted to be actuated by a pressurised medium for establishing a frictional connection between an output shaft (4) including a driver plate (11) stationarily disposed thereon and a driving shaft (3) including a driving disk (9) stationarily disposed thereon for transmitting a torque from said driving shaft (5) as a result of a permanent action of a pressurised medium upon said cylinder-piston unit (5), with said friction clutch (1) comprising means disposed for movement between said cylinder-piston unit (5) and said driver plate (11) on said output shaft (4) for realising a connection of said driving shaft (3) with said output shaft (4),
**characterised in that** said means are configured in the form of a clamping disk (8) without a lever, which is axially displaceable on said output shaft (4).

2. Pressure-controlled friction clutch according to Claim 1,
**characterised in that** said clamping disk (8) is connected to the piston (7) of said cylinder-piston unit (5) by means of connecting means for the transmission of the axial movement of said piston (7) to said clamping disk (8).

3. Pressure-controlled friction clutch according to Claim 2,
**characterised in that** said clamping disk (8) is connected to said driving shaft (3) via a positive connection for axial displacement and, at the same time, for joint rotation in such a manner that it can follow the rotational movement of said driving shaft (3).

4. Pressure-controlled friction clutch according to Claim 3,
**characterised in that** said clamping disk (8) is supported for rotation by means of a bearing.

5. Pressure-controlled friction clutch according to Claim 1,
**characterised in that** a disengaging element (12) is provided on said clamping disk (8) for release of the connection between said drive shaft (3) and said output shaft (4).

6. Pressure-controlled friction clutch according to Claim 5,
**characterised in that** said disengaging element (12) is configured as a resilient element disposed, in a sandwich-like manner, between said clamping disk (8) and said driver plate (11).

7. Pressure-controlled friction clutch according to Claim 6,
**characterised in that** said disengaging element (12) is configured without a bias.

8. Pressure-controlled friction clutch according to any of the preceding Claims,
**characterised in that** said cylinder-piston unit (5) is a pneumatically operable cylinder-piston unit (5).

9. Pressure-controlled friction clutch according to any of the preceding Claims,
**characterised in that** the friction clutch (1) presents a linear load displacement characteristic curve so as to permit a comfortable switching operation.

10. Pressure-controlled friction clutch according to any of the preceding Claims,
**characterised in that** said piston-cylinder unit (5) is mounted as separate module adapted for replacement on the clutch housing (2).

## Revendications

1. Embrayage à friction (1) commandé par pression, en particulier pour des véhicules automobiles, lequel comporte une unité à piston et cylindre (5), pouvant être actionnée par un fluide sous pression, afin de réaliser un assemblage par force entre un arbre de sortie (4) ayant un disque d'entraînement (11), qui est monté de manière fixe, et un arbre d'entraînement (3) ayant un disque de commande (9), qui y est monté de manière fixe, en vue de transmettre un couple de rotation de l'arbre d'entraînement (3) sous l'effet d'une alimentation permanente en fluide sous pression de l'unité à piston et cylindre (5), l'embrayage à friction (1) comportant des moyens qui sont disposés de manière mobile entre l'unité à piston et cylindre (5) et le disque d'entraînement (11) sur l'arbre de sortie (4), afin de réaliser une liaison de l'arbre d'entraînement (3) avec l'arbre de sortie (4),
**caractérisé en ce que** les moyens sont réalisés sans levier sous la forme d'un disque de serrage (8), pouvant se déplacer dans le sens axial sur l'arbre de sortie (4).

2. Embrayage à friction commandé par pression selon la revendication 1, **caractérisé en ce que** le disque de serrage (8) est relié au piston (7) de l'unité à piston et cylindre (5) par des moyens d'assemblage pour transmettre le mouvement axial du piston (7) au disque de serrage (8).

3. Embrayage à friction commandé par pression selon la revendication 2, **caractérisé en ce que** le disque de serrage (8) est relié par un assemblage par conjugaison de forme avec l'arbre d'entraînement (3) de manière mobile dans le sens axial et, en même temps, de manière entraînable en rotation, afin de suivre le mouvement de rotation de l'arbre d'entraînement (3).

4. Embrayage à friction commandé par pression selon la revendication 3, **caractérisé en ce que** le disque de serrage (8) est monté de manière rotative au moyen d'un palier.

5. Embrayage à friction commandé par pression selon la revendication 1, **caractérisé en ce que** sur le disque de serrage (8) est prévu un élément de débrayage (12) pour désolidariser l'assemblage entre l'arbre d'entraînement (3) et l'arbre de sortie (4).

6. Embrayage à friction commandé par pression selon la revendication 5, **caractérisé en ce que** l'élément de débrayage (12) est réalisé sous la forme d'un élément élastique, disposé en sandwich entre le disque de serrage (8) et le disque d'entraînement (11).

7. Embrayage à friction commandé par pression selon la revendication 6, **caractérisé en ce que** l'élément de débrayage (12) est réalisé sans précontrainte.

8. Embrayage à friction commandé par pression selon l'une quelconque des revendications précédentes, **caractérisé en ce que** l'unité à piston et cylindre (5) est une unité à piston et cylindre (5) pneumatique.

9. Embrayage à friction commandé par pression selon l'une quelconque des revendications précédentes, **caractérisé en ce que** l'embrayage à friction (1) possède une courbe caractéristique force-trajectoire linéaire pour permettre un processus de passage de vitesse confortable.

10. Embrayage à friction commandé par pression selon l'une quelconque des revendications précédentes, **caractérisé en ce que** l'unité à piston et cylindre (5) est montée sous forme d'unité séparée de manière amovible sur le carter d'embrayage (2).
